# EUROPEAN PATENT APPLICATION

(11) **EP 4 730 510 A1**
(43) Date of publication of application: **22.04.2026**
(21) Application number: 25768500.8
(22) Date of filing: 11.02.2025
(51) Int. Cl.: H01M 50/207, H01M 50/30, H01M 50/271, H01M 50/249

(54) **BATTERY MODULE, AND BATTERY PACK AND VEHICLE INCLUDING SAME**

(30) Priority: 08.03.2024 KR 20240033429
(71) Applicant: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Plasseraud IP
(86) International application number: PCT/KR2025/001961
(87) International publication number: WO 2025/187976

(57) **Abstract**

The present disclosure relates to a battery module including: a cell assembly including a plurality of battery cells; a module terminal electrically connected to the plurality of battery cells and disposed on at least one of six sides of the cell assembly; and a module frame configured to receive the cell assembly and including a first frame configured to cover some of the sides of the cell assembly, as well as a side of the cell assembly where the module terminal is disposed, and a second frame configured to cover remaining sides of the cell assembly.

## Description

### TECHNICAL FIELD

The present disclosure relates to a battery module, and a battery pack and vehicle including the same.

This application is based on and claims priority from Korean Patent Application No. 10-2024-0033429, filed on March 08, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack.

In the conventional battery module, the module frame is comprised of various parts such as a frame body with front and rear openings, a top plate, and end plates coupled to the front and rear openings of the frame body. As described above, in the case where the module frame is configured as multiple parts, multiple plates must be manufactured separately, and multiple welding processes must be performed to connect the multiple plates, which reduces productivity.

In addition, since welds are formed in multiple locations, if an event such as thermal runaway occurs in one battery cell, the pressure inside the module frame increases due to high-temperature venting gas or flame, which may cause the module frame to be damaged.

Furthermore, if the weld is broken, external oxygen may flow into the module frame, thereby increasing flames inside the battery module. In addition, this may lead to a fire or explosion of the battery module or battery pack. Such a fire or explosion of the battery module or battery pack may cause property damage as well as human casualties. For example, a fire or explosion occurring in a battery pack for an electric vehicle may threaten the safety of users, such as drivers.

### DISCLOSURE

### Technical Problem

The present disclosure is designed to solve the problems of the related art, and therefore the present disclosure is directed to providing a battery module capable of enhancing productivity by minimizing the parts of the module frame of the battery module, and capable of securing safety by stably maintaining the coupling state of the module frame, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells; a module terminal electrically connected to the plurality of battery cells and disposed on at least one of six sides of the cell assembly; and a module frame configured to receive the cell assembly and including a first frame configured to cover some of the sides of the cell assembly, as well as a side of the cell assembly where the module terminal is disposed, and a second frame configured to cover remaining sides of the cell assembly.

The first frame may be configured to cover front, rear, and bottom sides of the cell assembly, and the second frame may be configured to cover top, left, and right sides of the cell assembly.

The first frame may be configured in an integrated form to cover the front, rear, and bottom sides of the cell assembly.

The second frame may be configured in an integrated form to cover the top, left, and right sides of the cell assembly.

At least one of the first frame and the second frame may be configured to be bent so as to cover different sides of the cell assembly.

At least one of the first frame and the second frame may be configured in a U-shape with three open sides.

The second frame may have a venting hole configured to discharge venting gas generated in the battery cell to the outside.

The venting hole may be provided on the upper portion of the cell assembly.

The battery module may further include a frame cover configured to at least partially cover the module frame.

A cover hole may be formed in the frame cover at a position corresponding to the venting hole.

The frame cover may include a cover member configured to cover the cover hole and to open and close the cover hole by venting gas.

At least a portion of the first frame may be configured to be open on a side where the module terminal is located.

The first frame may include a protrusion configured such that at least a portion protrudes upward from the side where the module terminal is located so as to come into contact with the second frame.

The first frame may be configured in a form in which a front side and a rear side are rotationally symmetrical.

The first frame may be configured in a form in which at least a portion is open on a side opposite a side where the module terminal is located.

A weld may be formed at an open-sided end where the first frame and the second frame are in contact with each other.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, it is possible to reduce the cost and time in manufacturing the battery module by minimizing the number of parts of the module frame and covering all sides of the cell assembly. Accordingly, productivity can be improved and management convenience can be enhanced.

In addition, according to another aspect of the present disclosure, even if an impact or vibration occurs in the battery module, the module frame can be stably maintained without being damaged or broken. Therefore, the structural stability of the battery module can be secured.

Therefore, according to the above aspect of the present disclosure, even if a thermal event such as venting gas or flame occurs in the battery module, it is possible to minimize the release of the venting gas or flame to the outside through a damaged or broken portion of the module frame, thereby effectively preventing thermal runaway propagation between the battery modules.

In particular, according to the above aspect of the present disclosure, even if a thermal event such as venting gas or flame occurs in the battery module and one of the several module frame parts is separated from the cell assembly, other parts can remain in the state of covering some sides of the cell assembly, particularly, the side where the module terminal is provided. Accordingly, the safety and reliability of the battery module can be guaranteed.

Furthermore, according to the above aspect of the present disclosure, it is possible to effectively prevent fire from spreading due to oxygen or the like introduced through damaged or broken parts of the module frame in the battery module.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view taken along line I - I' in FIG. 1.
FIG. 4 is an exploded perspective view of a module frame of a battery module according to an embodiment of the present disclosure.
FIG. 5 is a drawing illustrating a frame cover applied to a battery module according to an embodiment of the present disclosure.
FIG. 6 is a partially exploded perspective view of a battery module according to an embodiment of the present disclosure.
FIG. 7 is an exploded perspective view of a lower portion of a battery module according to an embodiment of the present disclosure.
FIG. 8 is a front view of a battery module according to an embodiment of the present disclosure.
FIG. 9 is a schematically perspective view of a first frame of a battery module according to another embodiment of the present disclosure.
FIG. 10 is a rear view of a battery module according to another embodiment of the present disclosure.
FIG. 11 is a schematically perspective view of a first frame of a battery module according to another embodiment of the present disclosure.
FIG. 12 is a front view of a battery module according to another embodiment.
FIG. 13 is a rear perspective view of a battery module with a frame cover applied according to another embodiment of the present disclosure.
FIG. 14 is a drawing illustrating the state where a portion of a frame cover is opened when a thermal event occurs in a battery module according to another embodiment of the present disclosure.
FIG. 15 is a drawing illustrating a weld of a battery module according to an embodiment of the present disclosure.
FIG. 16 is a drawing illustrating a separated module frame in a battery module according to another embodiment of the present disclosure.
FIG. 17 is a cross-sectional view illustrating a coupling portion of a module frame to a battery module according to another embodiment of the present disclosure.
FIG. 18 is a schematically perspective view of a battery pack according to an embodiment of the present disclosure.
FIG. 19 is a schematically perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction, i.e., a height direction of the battery cell.

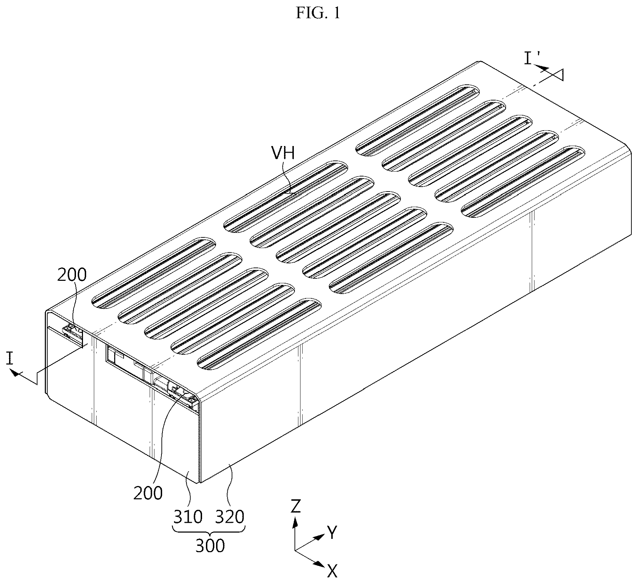

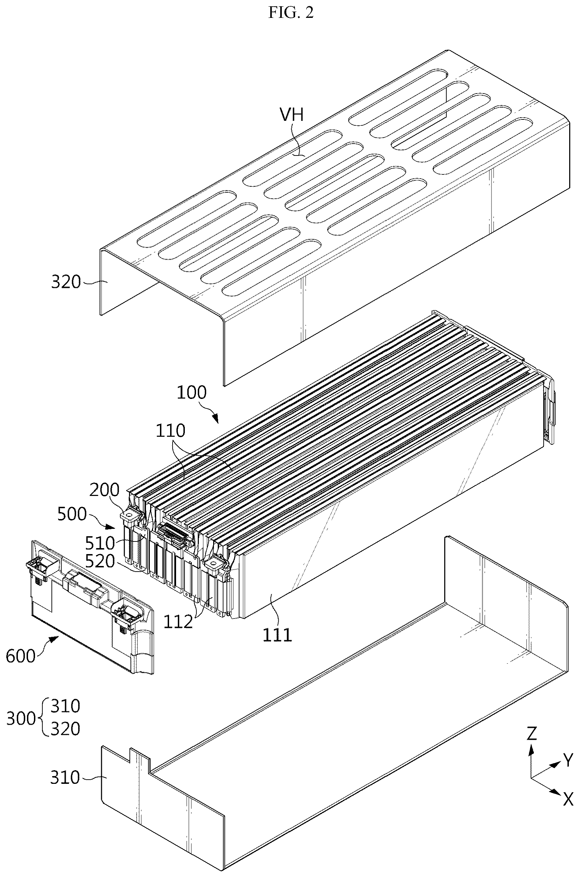

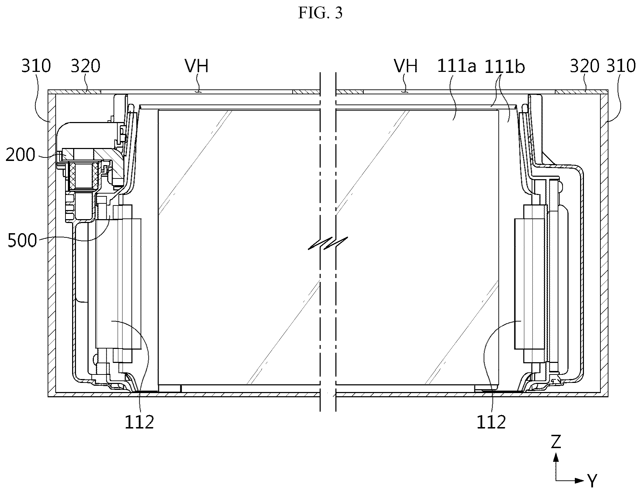

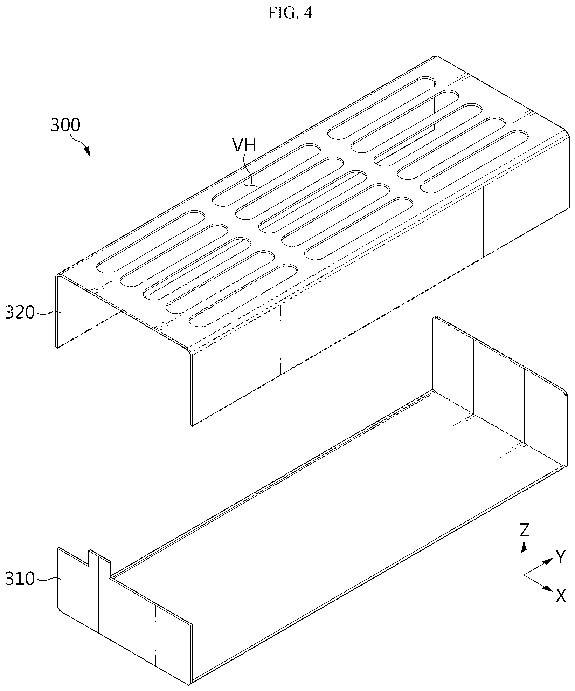

FIG. 1 is a perspective view of a battery module according to an embodiment of the present disclosure, FIG. 2 is an exploded perspective view of a battery module according to an embodiment of the present disclosure, and FIG. 3 is a cross-sectional view of a battery module according to an embodiment of the present disclosure, which may be a cross-sectional view taken along line I - I' in FIG. 1. In addition, FIG. 4 is an exploded perspective view of a module frame of a battery module according to an embodiment of the present disclosure.

Referring to FIGS. 1 to 4, the battery module 10 according to the present disclosure includes a cell assembly 100, a module terminal 200, and a module frame 300.

The cell assembly 100 may include one or more battery cells 110, particularly, a plurality of battery cells 110. Here, each battery cell 110 may indicate one secondary battery, or may indicate a group of multiple secondary batteries. In this specification, the description will be made based on the battery cell 110 representing one secondary battery.

The plurality of battery cells 110 may include an electrode assembly, a cell case 111 that stores the electrode assembly, and an electrode lead 112 that is connected to the electrode assembly and extends outside the cell case 111 to function as an electrode terminal.

In this case, the cell case 111 may be configured in various shapes, and the battery cells 110 may be classified into a pouch-type cell, a cylindrical cell, and a prismatic cell depending on the shape of the cell case 111. Since the types of battery cells 110 were widely known at the time of filing the present disclosure, a detailed description thereof will be omitted. Although the drawings of this specification show a pouch-type battery cell, the present disclosure is applicable to all types of secondary batteries known at the time of filing the present disclosure, and is not limited to a specific type of secondary battery.

In the cell assembly 100, the plurality of battery cells 110 may be configured to be stacked in one direction. For example, the plurality of battery cells 110 may be stacked side by side in the left-right direction (±X-axis direction). This cell assembly 100 may include six sides. That is, the cell assembly 100 may be configured in a cuboid shape.

In addition, the plurality of battery cells 110 provided in the cell assembly 100 may be electrically connected to each other in series and/or in parallel through a bus-bar 520, which will be described later.

The module terminal 200 may be configured to be electrically connected to the electrode lead 112 of the battery cell 110. The module terminal 200 may include a positive electrode terminal and a negative electrode terminal. In addition, the module terminal 200 may be configured to be electrically or communicatively connected to a control device such as a BMS.

The module terminal 200 may be disposed on at least one of the six sides of the cell assembly 100. For example, the module terminal 200 may be provided on the side where the electrode lead 112 of the battery cell 110 extends outward. For example, the electrode lead 112 of the battery cell 110 may extend outward in the front-back direction, and the module terminal 200 may be provided on the front side of the cell assembly 100.

The module frame 300 may be configured to store the cell assembly 100. Specifically, the module frame 300 may be configured to have a storage space formed therein and may store the cell assembly 100 in the storage space. For example, the module frame 300 may be configured in a cuboid shape formed by coupling several parts. Accordingly, the module frame 300 may be configured to cover six sides of the cell assembly 100. The module frame 300 may be at least partially configured as metal and/or plastic materials.

More specifically, referring to FIGS. 1 to 4, the module frame 300 may include a first frame 310 and a second frame 320. The first frame 310 and the second frame 320 may be coupled to each other, thereby forming the exterior of the module frame 300, and may store the cell assembly 100 therein. In this case, the first frame 310 and the second frame 320 may be coupled by various fastening methods such as welding, bonding, bolting, and hooking.

The first frame 310 and the second frame 320 may be configured to separately cover six sides of the cell assembly 100. When the first frame 310 and the second frame 320 are coupled to each other, the first frame 310 may be configured to cover some of the six sides of the cell assembly 100, and the second frame 320 may be configured to separately cover some other sides of the cell assembly 100 while being coupled to the first frame 310.

In particular, the first frame 310 may be configured to cover the side of the cell assembly 100 where the module terminal 200 is disposed. For example, in the case where the module terminal 200 is disposed on the front side of the cell assembly 100, the first frame 310 may be configured to cover the front side of the cell assembly 100.

For example, as disclosed in the embodiments illustrated in FIGS. 1 to 4, the first frame 310 may be configured to cover three sides of the cell assembly 100 including the front side of the cell assembly 100, and the second frame 320 may be configured to cover the remaining three sides of the cell assembly 100.

That is, the battery module 10 according to an embodiment of the present disclosure may be configured to cover six sides of the cell assembly 100 with only the first frame 310 and the second frame 320.

According to the above-implemented configuration of the present disclosure, the module frame 300 may be configured as only two parts, i.e., the first frame 310 and the second frame 320, to cover all sides of the cell assembly 100. Accordingly, the number of parts of the module frame 300 may be minimized, thereby reducing the cost and time in manufacturing the battery module 10. Therefore, productivity may be improved and convenience of management may be enhanced.

In addition, according to the above-implemented configuration of the present disclosure, since the coupling area of various parts of the module frame 300 may be minimized, even if an impact or vibration is applied to the battery module 10, the module frame 300 may be prevented from being damaged or broken. Therefore, the structural stability of the battery module 10 may be secured.

In particular, according to the above-implemented configuration of the present disclosure, even if a thermal event such as venting gas or flame occurs in the battery module 10, the coupling state of the module frame 300 may be stably maintained. Accordingly, it is possible to prevent the module frame 300 from being separated and the venting gas or flame from being released to the outside. In addition, according to the above-implemented configuration of the present disclosure, it is possible to effectively prevent fire from spreading by oxygen flowing into the module frame 300 through a damaged or broken portion of the module frame 300. Therefore, the safety of the battery module may be secured.

As a more specific example, referring to FIG. 1 and FIG. 4, the first frame 310 may be configured to cover the front side, rear side, and bottom side of the cell assembly 100. In addition, the second frame 320 may be configured to cover the top side, left side, and right side of the cell assembly 100.

According to the above-implemented configuration of the present disclosure, the front and rear sides of the cell assembly 100 may be completely covered by the first frame 310. Therefore, when a thermal event occurs in the battery module 10, venting gas or flames may be minimized from heading toward the adjacent battery module 10 through the front and rear sides of the module frame 300.

In particular, according to the above-implemented configuration of the present disclosure, since the first frame 310 covers the front side of the cell assembly 100 where the module terminal 200 is provided, damage to the module terminal 200 due to heat such as venting gas or flames when a thermal event occurs in another battery module 10 may be minimized. Therefore, according to the above-implemented configuration of the present disclosure, the safety of the battery module 10 may be secured more effectively.

In this case, the first frame 310 may be configured in an integrated form to cover the front, rear, and bottom sides of the cell assembly 100. In addition, the second frame 320 may be configured in an integrated form to cover the top, left, and right sides of the cell assembly 100.

That is, at least one of the first frame 310 and the second frame 320 may be configured in a bent form to cover different sides of the cell assembly 100. The first frame 310 may be configured in a bent form to cover the front, back, and bottom sides of the cell assembly 100. In this case, the bent portion of the first frame 310 may be disposed along the front-back direction. In addition, the second frame 320 may be configured in a bent form to cover the top, left, and right sides of the cell assembly 100. In this case, the bent portion of the second frame 320 may be disposed along the left-right direction.

As a more specific example, in the embodiment in FIG. 4, at least one of the first frame 310 and the second frame 320 may be configured in a U-shape with three open sides. The first frame 310 and the second frame 320 may be configured to have three edges on each of both open sides. For example, the first frame 310 located at the bottom may be configured substantially in a U-shape when viewed from the left and right. Likewise, the second frame 320 may be configured substantially in an n-shape when viewed from the front and rear.

In this case, the first frame 310 and the second frame 320 may be configured to be coupled to each other in the vertical direction (±Z-axis direction). As a result, when the first frame 310 and the second frame 320 are coupled, the open-sided ends of the first frame 310 and the second frame 320 may be configured to come into contact with and be coupled to each other. That is, the three edges provided on the left and right sides of the first frame 310 and the three edges provided on the front and rear sides of the second frame 320 may be configured to come into contact with each other. Accordingly, the module frame 300 may be configured in a cuboid shape.

According to the above-implemented configuration of the present disclosure, the coupling between the first frame 310 and the second frame 320 may be implemented only by simple shapes of the first frame 310 and the second frame 320. Accordingly, the assembly efficiency between the first frame 310 and the second frame 320 may be improved.

In particular, the second frame 320 may be configured in a shape that is symmetrical in the left-right direction and up-down direction. According to this implemented configuration, the module frame 300 may be formed by rotating the second frame 320 in any direction and then coupling the same to the first frame 310. Accordingly, the productivity may be further improved when manufacturing the module frame 300.

The module frame 300 may have a venting hole VH formed on at least one side. This venting hole VH may be configured to discharge the venting gas generated in the battery cell 110 to the outside of the module frame 300.

For example, the venting hole VH may be formed as an opening to communicate the inside and outside of the module frame 300 with each other. However, the venting hole VH may not be completely open, but may be configured to be closed in a normal state and opened depending on changes in pressure or temperature.

A plurality of venting holes VH may be provided. The plurality of venting holes VH may be arranged in multiple columns and rows. In addition, the venting hole VH may be configured to extend in one direction. For example, the venting hole VH may be formed to extend in a longitudinal direction of the battery cell 110.

According to this implemented configuration of the present disclosure, it is possible to prevent the battery module 10 from exploding due to an increase in the pressure inside the battery module 10 by the venting hole VH. In addition, in this case, the discharge direction of venting gas may be guided.

In particular, the venting hole VH may be formed in the second frame 320. For example, the venting hole VH may be formed on the top side of the module frame 300. That is, the venting hole VH may be provided at the top of the cell assembly 100. Accordingly, the venting gas inside the battery module 10 may be guided to be discharged upward.

According to the above-implemented configuration of the present disclosure, the second frame 320 in which the venting hole VH is formed and the first frame 310 covering the side of the cell assembly 100 where the module terminal 200 is provided may be configured as separate parts. Therefore, even if the second frame 320 is separated due to a force applied upward by the pressure of the venting gas or flame discharged through the venting hole VH, the first frame 310 may remain in the state of covering the side where the module terminal 200 is provided. Therefore, according to the above-implemented configuration of the present disclosure, the safety of the battery module 10 may be secured.

In particular, referring to FIGS. 2 and 3, in the case where the battery cell 110 is configured as a pouch-type battery cell, the cell case 111 may have a receiving portion 111a and a sealing portion 111b. The receiving portion 111a may be configured to receive an electrode assembly, and the sealing portion 111b may be configured to seal the electrode assembly by heat-fusing the edges of the receiving portion 111a. For example, one cell case 111 may be folded in the middle to store an electrode assembly therebetween, and may include a receiving portion 111a that receives the electrode assembly and a sealing portion 111b obtained by sealing three edges of the receiving portion 111a.

A pair of electrode leads 112 may be provided, and the pair of electrode leads 112 may extend outward from both ends of the battery cell 110 in the longitudinal direction. In this case, the pair of electrode leads 112 may be a positive electrode lead and a negative electrode lead. The battery cell 110 may be configured such that two electrode leads 112 are located only at one end in the longitudinal direction, for example, at the end in the +Y-axis direction, as necessary.

In this case, the sealing portion 111b may include a portion from which the electrode lead 112 extends outward and a portion from which no electrode lead 112 extends outward. For example, as disclosed in the embodiment illustrated in FIG. 3, the portion of the sealing portion 111a where the electrode lead 112 extends outward may be provided on both sides of the cell case 111 along the front-back direction, and the portion where no electrode lead 112 extends outward may be provided on the top side. That is, the plurality of battery cells 110 may be stacked face to face so that the electrode leads 112 extend outward in the front-back direction, and so that the sealing portion 111a where no electrode lead 112 extends outward faces upward.

In this case, the venting gas generated in the battery cell 110 may be vented to the outside through the sealing portion 111a where no electrode lead 112 extends outward. Therefore, the venting gas may be guided to vent upward. According to the above-implemented configuration of the present disclosure, the venting gas or the like vented upward from the battery cell 110 may be discharged to the outside of the battery module 10 through the venting hole VH provided at the top.

According to the above-implemented configuration of the present disclosure, the venting of the battery cell 110 may be more effectively guided upward. Accordingly, in the case where the first frame 310 and the second frame 320 are assembled in the front-back direction, even if a thermal event such as venting gas or flame occurs in the battery module 10, the separation of the first frame 310 and the second frame 320 due to the pressure of the venting gas or flame may be minimized. Therefore, the structural stability of the battery module 10 may be further secured.

In addition, referring to FIG. 2, the battery module 10 of the present disclosure may further include a bus-bar frame assembly 500. The bus-bar frame assembly 500 may be provided inside the module frame 300 and configured to cover at least one side of the plurality of battery cells 110. The bus-bar frame assembly 500 may be located on the side where the electrode leads 112 of the battery cells 110 extend outward. For example, the bus-bar frame assembly 500 may be coupled to the front and rear sides of the plurality of battery cells 110.

The bus-bar frame assembly 500 may include a bus-bar frame 510 and a plurality of bus-bars 520. The bus-bar frame 510 may be disposed to be substantially coupled to the front and rear sides of the plurality of battery cells 110. The bus-bar frame 510 may have slits through which the electrode leads of the battery cells 110 may pass in the front-back direction.

In addition, the bus-bar frame 510 may be formed of a material having electrical insulation, such as a plastic material, and configured such that the bus-bar 520 may be attached to the outer surface.

The plurality of bus-bars 520 may be formed of a metal material, such as copper, aluminum, nickel, or the like, as a means for connecting the battery cells 110 in series and/or in parallel, and may be configured in a rod shape.

The electrode leads 112 of the battery cells 110 may pass through the slits of the bus-bar frame 510 and extend outside the bus-bar frame 510, and the extending portion may be attached to the surface of the bus-bar 520 by welding or the like.

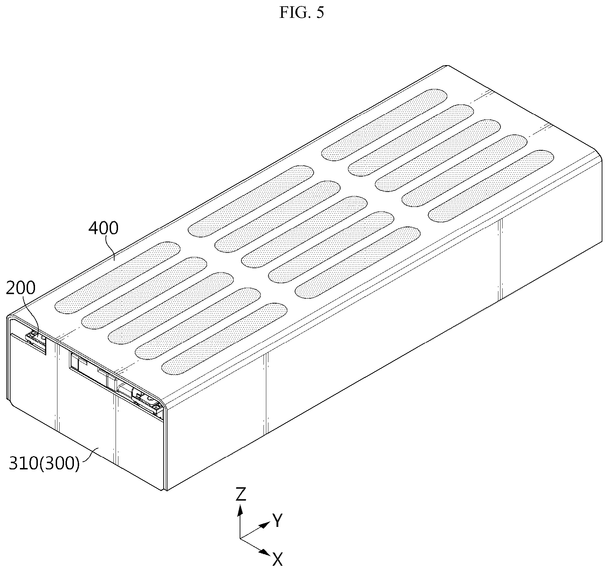

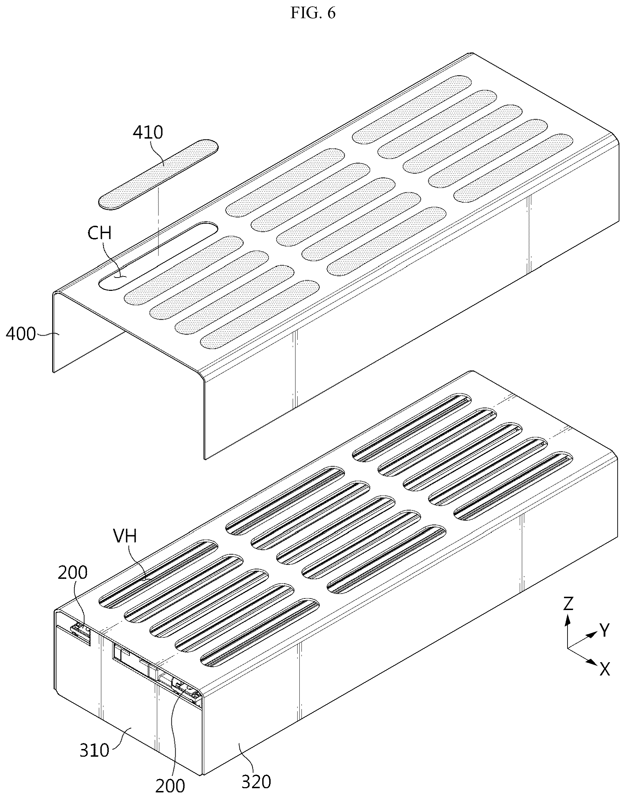

FIG. 5 is a drawing illustrating a frame cover applied to a battery module according to an embodiment of the present disclosure, and FIG. 6 is a partially exploded perspective view of a battery module according to an embodiment of the present disclosure.

Referring to FIGS. 5 and 6, the battery module 10 according to an embodiment of the present disclosure may further include a frame cover 400. The frame cover 400 may be configured to at least partially cover the module frame 300. The frame cover 400 may be provided on the outer side of the module frame 300.

Specifically, the frame cover 400 may be configured to cover at least one of the six sides of the module frame 300. The frame cover 400 may be configured to cover at least the second frame 320. The frame cover 400 may be configured in the same shape as the second frame 320. For example, as disclosed in the embodiment illustrated in FIG. 5, the frame cover 400 may be configured in a U-shape.

The frame cover 400 may be configured to suppress venting gas or flame, discharged when a thermal event occurs inside the battery module 10, from spreading to another battery module 10. To this end, the frame cover 400 may be made of a material having excellent heat resistance and/or fire resistance, such as a mica sheet or a silicone composite material.

Accordingly, the frame cover 400 may maintain morphological stability without deformation even when high-temperature heat is generated, thereby stably blocking high-temperature gas or flame generated from the battery cell 110.

According to the above-implemented configuration of the present disclosure, since the frame cover 400 is configured as a hard and heat-resistant material, deformation due to high-temperature gas or flame may be minimized.

The frame cover 400 may have a cover hole CH formed therein. The cover hole CH may be configured to discharge the venting gas released through the venting hole VH to the outside of the battery module 10.

A plurality of cover holes CH may be provided at regular intervals along the horizontal direction (X-axis and Y-axis directions). In particular, the cover hole CH may be formed at a position corresponding to the venting hole VH. The cover hole CH may be formed on the upper side of the frame cover 400. According to the above-implemented configuration of the present disclosure, venting gas or flame may be rapidly vented along a specific direction through the venting hole VH and the cover hole CH.

The frame cover 400 may include a cover member 410. The cover member 410 may be configured to cover the cover hole CH. The cover members 410 may be configured to respectively cover the cover holes CH. The cover member 410 may be configured to be inserted into the cover hole CH, as disclosed in the embodiment illustrated in FIG. 5. In this case, the frame cover 400 may have a notch or a cut line in a portion corresponding to the venting hole VH.

Alternatively, unlike the above embodiment, the cover member 410 may be provided between the venting hole VH, and the cover hole CH. In this case, the cover member 410 may be configured in a sheet shape to be seated on the module frame 300. The cover member 410 may be configured to cover all of the plurality of cover holes CH. The cover member 410 may be attached to the inner side of the frame cover 400, or may be attached to the module frame 300.

Such a cover member 410 may be configured to open and close the cover hole CH by venting gas or flame, as disclosed in the embodiment illustrated in FIG. 6. Specifically, at least a portion of the cover member 410 may be configured to be ruptured by the pressure or heat of the venting gas heading toward the venting hole VH. Alternatively, the cover member 410 may be configured to be separated from the main body of the frame cover 400.

According to the above-implemented configuration of the present disclosure, when a thermal event occurs in a specific battery cell 110, the cover member 410 provided on one side of the specific battery cell 110 may be ruptured to open at least one of the plurality of venting holes VH. Accordingly, venting gas or the like may be discharged to the outside of the module frame 300 through the opened venting hole VH.

In addition, the cover member 410 may prevent gas or flame discharged to the outside of the module frame 300 from flowing back into the battery module 10. That is, the venting hole VH provided on the side of the battery cell 110 where the thermal event does not occur may remain in the closed state.

As a result, the venting gas or flame discharged to the outside through the open venting hole VH may be fundamentally blocked from flowing back into the battery module 10. In addition, the remaining cover members 410 that are not ruptured may block high-temperature gas, flame, and discharges, as well as heat, generated from the battery cell 110.

According to the above-implemented configuration of the present disclosure, when thermal runaway occurs in the battery module 10, not only may the venting gas or flame generated inside the battery module 10 be smoothly discharged to the outside of the battery module 10, but also the discharged venting gas or flame may be prevented from flowing back into the battery module 10. Therefore, the thermal runaway propagation may be effectively prevented or delayed by minimizing the heat propagation to neighboring battery cells 110 or battery modules 10.

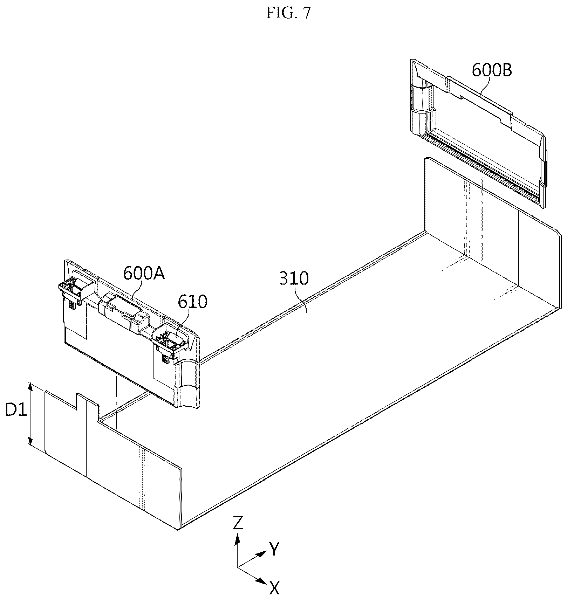

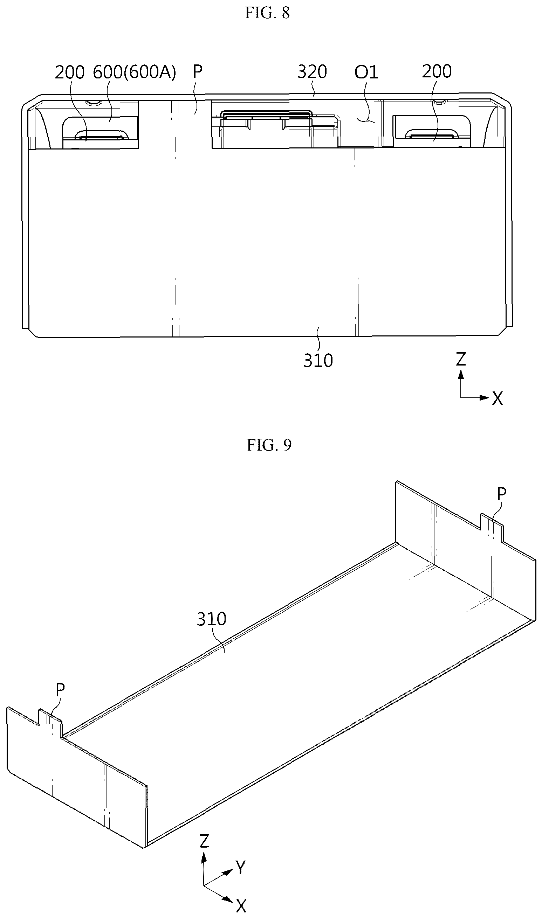

FIG. 7 is an exploded perspective view of a lower portion of a battery module according to an embodiment of the present disclosure, and FIG. 8 is a front view of a battery module according to an embodiment of the present disclosure.

Referring to FIGS. 7 and 8, the first frame 310 may be configured to have an opening on at least a portion of the side where the module terminal 200 is provided. In addition, the side of the first frame 310 opposite the side where the module terminal 200 is located may be configured to be completely closed.

As a more specific example, the first frame 310 may have a protrusion P and a first opening O1. The protrusion P and the first opening O1 may be provided on the side where the module terminal 200 is located. In addition, the protrusion P may be configured to protrude upward so that at least a portion thereof comes into contact with the second frame 320.

Specifically, the front side of the first frame 310 may cover a lower portion of the front side of the cell assembly 100, and the upper portion thereof may be at least partially open to form the first opening O1.

As a result, when the first frame 310 and the second frame 320 are coupled to each other, the left and right edges and the protrusion P of the front side of the first frame 310 may come into contact with the second frame 320. In this case, the length D1 of the left and right edges of the front side of the first frame 310 in contact with the second frame 320 may be configured to be smaller than the height of the second frame 320 or the height of the cell assembly 100.

In this case, a plurality of first openings O1 may be provided. In addition, the plurality of first openings O1 may be disposed to be spaced apart from each other along the left-right directions by the protrusions P. The first opening O1 may be configured by cutting off a portion of the first frame 310. For example, the first opening O1 may be configured such that the left and right corners are cut off from the front side of the first frame 310.

This first opening O1 may be configured to expose a control device or an electrical or communication connection device of the battery module 10, such as a module terminal 200 or a connector, to the outside. That is, the module terminal 200 may be configured such that at least a portion passes through the first opening O1.

According to the above-implemented configuration of the present disclosure, the internal components of the module frame 300 may be minimized from being exposed to the front by exposing the module terminal 200 to the outside from the front side of the first frame 310 through the first opening O1 and providing the protrusion P.

Referring to FIG. 7, the battery module 10 according to an embodiment of the present disclosure may further include an insulating cover 600. The insulating cover 600 may be configured to electrically insulate the module frame 300 made of a metal material from the bus-bar 520 or the electrode lead 112. The insulating cover 600 may be made of a plastic material.

The insulating cover 600 may be provided on the inner side of the module frame 300, particularly, on the inner side of the first frame 310. The insulating cover 600 may be provided between the module frame 300, and the cell assembly 100 and the bus-bar frame assembly 500.

As disclosed in the above-implemented configuration of the present disclosure, since the insulating cover 600 is interposed between the module frame 300, and the cell assembly 100 and the bus-bar frame assembly 500, the assembly efficiency may be improved compared to a conventional battery module in which the end plates forming the front and rear sides of the module frame have an insulating cover on the inner side so that the insulating cover and the end plate are welded to the cell assembly.

In addition, according to the above-implemented configuration of the present disclosure, when the internal pressure of the battery module 10 increases, the front and rear sides of the first frame 310 may support the insulating cover 600, so that the possibility of the insulating cover 600 being separated may be minimized, and thus electrical insulation and structural stability may be secured.

Furthermore, according to the above-implemented configuration of the present disclosure, separation of the cell assembly 100 and the insulating cover 600 by venting gas or flame may be suppressed, and thus venting gas or flame may be prevented from being discharged toward the front of the battery module 10. Therefore, thermal runaway propagation between the battery modules 10 may be prevented.

This insulating cover 600 may include a first insulating cover 600A provided on the side where the module terminal 200 of the cell assembly 100 is located, i.e., the front side, and a second insulating cover 600B provided on the side, i.e., the rear side, opposite the side where the module terminal 200 of the cell assembly 100 is located.

The first insulating cover 600A may be configured to electrically insulate the module frame 300 from the module terminal 200. The first insulating cover 600A may be configured to surround the outer side where the module terminal 200 is exposed to the outside.

In addition, referring to FIG. 8, the first insulating cover 600A may have a through-hole 610. The through-hole 610 may be configured such that the module terminal 200 may pass therethrough. The through-hole 610 may be provided at a position corresponding to the first opening O1. Accordingly, the module terminal 200 may be configured to be at least partially exposed to the outside through the first opening O1 and the through-hole 610.

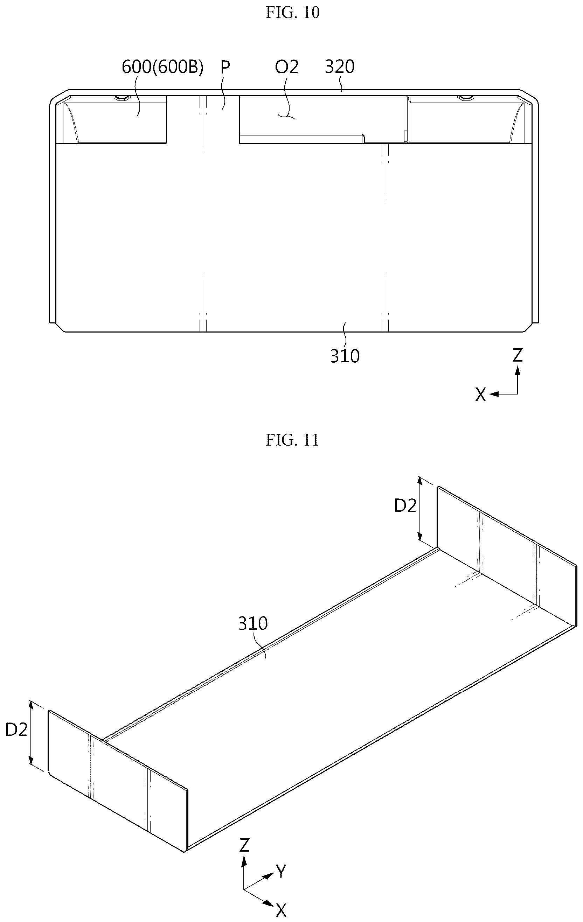

FIG. 9 is a schematically perspective view of a first frame of a battery module according to another embodiment of the present disclosure, and FIG. 10 is a rear view of a battery module according to another embodiment of the present disclosure.

According to another embodiment of the present disclosure, the first frame 310 may be configured such that the front side and the rear side are rotationally symmetrical. For example, as disclosed in the embodiment illustrated in FIG. 9, the rear side of the first frame 310 may be configured in a form obtained by rotating the front side of the first frame 310 by 180 degrees in the horizontal direction. That is, when the first frame 310 is viewed from the front and rear, the front and rear sides of the first frame 310 may be configured in the same form.

According to the above-implemented configuration of the present disclosure, when manufacturing the battery module 10, it is not necessary to have the first opening O1 of the first frame 310 face the module terminal 200 in order to expose a portion of the module terminal 200 to the outside of the first frame 310. That is, the first frame 310 may be coupled to the second frame 320, regardless of the position or direction of the first opening O1. Accordingly, according to the above-implemented configuration of the present disclosure, the module frame 300 may be assembled more easily when manufacturing, thereby improving productivity.

According to the above-described embodiment, the first frame 310 may be configured such that at least a portion is open on the side opposite the side where the module terminal 200 is located. That is, a second opening O2 may be formed on the rear side of the first frame 310.

More specifically, the first opening O1 in the configuration illustrated in FIG. 8 may be formed on the front side of the first frame 310, and a second opening O2 may be formed on the rear side of the first frame 310 because it has the same structure as the front side of the first frame 310. Referring to FIG. 10, the second opening O2 may be formed at a position where the position of the first opening O1 is reversed left or right.

The second opening O2 may be configured to allow the venting gas discharged from the battery cell 110 to flow out. That is, the second opening O2 may be configured to discharge heat to the outside, along with the venting hole VH, when a thermal event occurs in the inner space of the battery module 10.

According to this implemented configuration of the present disclosure, the venting gas released from the battery module 10 may be discharged in a distributed manner upward and rearward. Accordingly, it is possible to prevent the temperature from increasing intensively in a specific part outside the battery module 10. Therefore, it is possible to prevent the battery module 10 from exploding due to an increase in pressure inside the battery module 10. In addition, in this case, the discharge location of the venting gas may be restricted.

In particular, the cell assembly 100 inside the battery module 10 may be stacked in the left-right direction while standing in the up-down direction, as shown in FIG. 2. In this case, the venting gas discharged from one or more battery cells 110 included in the cell assembly 100 is likely to gather in the front or rear of the battery module 10 where the electrode lead 112 is located. In this case, as disclosed in the above embodiment, since the second opening O2 is located at the rear of the battery module 10, the venting gas may be discharged more quickly and smoothly through the second opening O2. In addition, in this case, the venting gas or heat such as flame may be suppressed or blocked from moving toward the front side of the battery module 10 where the module terminal 200 is provided.

In the above-implemented configuration, the insulating cover 600, i.e., the second insulating cover 600B, may be configured to cover the second opening O2 from the inside. According to the above-implemented configuration of the present disclosure, moisture or foreign substances may be prevented from flowing into the battery module 10 through the second opening O2.

In addition, at least a portion of the insulating cover 600 may be configured to be opened by the venting gas when a thermal event such as venting gas occurs inside the battery module 10. For example, the second insulating cover 600B may be partially melted and opened by heat such as venting gas or flame.

According to the above-implemented configuration of the present disclosure, the second insulating cover 600B may maintain insulation between the module frame 300 and the electrode lead 112 in a normal state of the battery module 10, and, when a thermal event occurs, a portion of the second insulating cover 600B may be opened so that venting gas or flame may be quickly discharged to the outside.

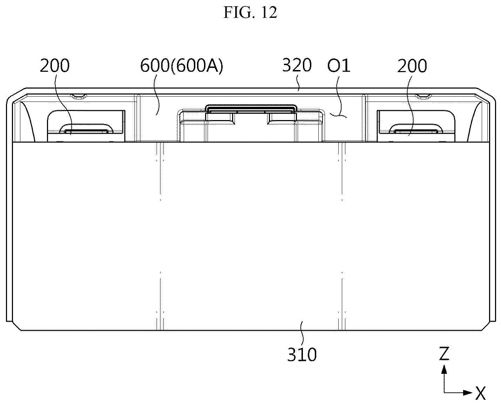

FIG. 11 is a schematically perspective view of a first frame of a battery module according to another embodiment of the present disclosure, and FIG. 12 is a front view of a battery module according to another embodiment.

According to another embodiment of the present disclosure, the first frame 310 may be configured such that portions of the front and rear sides are completely cut off. More specifically, the first opening O1 and the second opening O2 may be configured to extend in a straight line along the left-right direction. One first opening O1 and one second opening O2 may be provided.

Therefore, when the first frame 310 and the second frame 320 are coupled to each other, the left and right edges of the front and rear sides of the first frame 310 may come into contact with the second frame 320, respectively. In this case, the lengths D2 of the left and right edges of the first frame 310 that come into contact with the second frame 320 may be configured to be smaller than the height of the second frame 320 or the height of the cell assembly 100.

According to the above-implemented configuration of the present disclosure, the module frame 300 may be manufactured by folding a single plate without a separate cutting process, thereby obtaining a simple manufacturing process. In addition, according to the above-implemented configuration of the present disclosure, since the openings O2 and O3 are provided in a large size, it may be applied to any structure regardless of the location of the parts exposed to the outside of the module frame 300, such as the module terminal 200 or the connector. Therefore, since the cost and time may be reduced in manufacturing the battery module 10, thereby improving productivity.

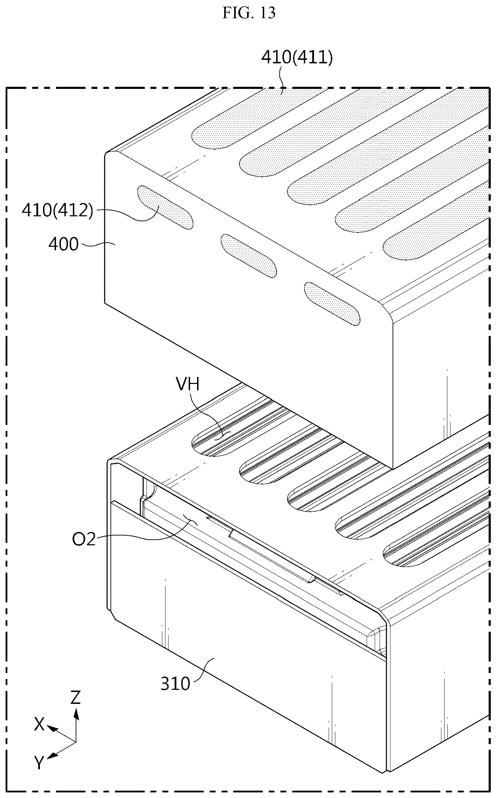

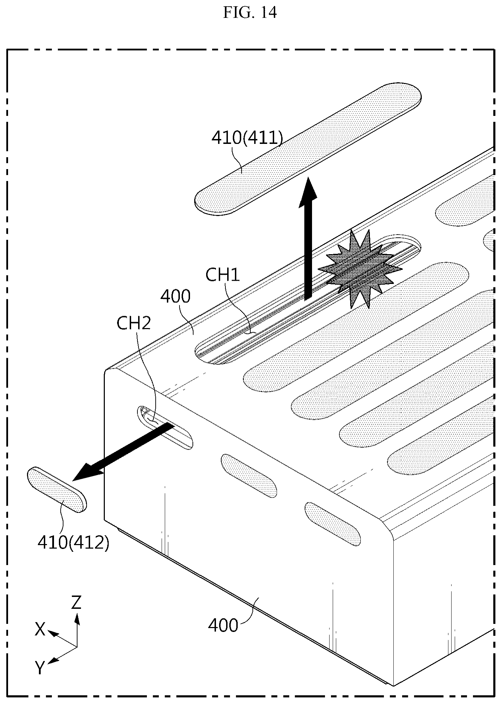

FIG. 13 is a rear perspective view of a battery module with a frame cover applied according to another embodiment of the present disclosure, and FIG. 14 is a drawing illustrating the state where a portion of a frame cover is opened when a thermal event occurs in a battery module according to another embodiment of the present disclosure.

As disclosed in the embodiment illustrated in FIGS. 9 and 11, in the case where a second opening O2 is formed on the rear side of the first frame 310, venting gas or flame is likely to flow in through the second opening O2 when a thermal event occurs in an adjacent battery module 10.

Therefore, according to another embodiment of the present disclosure, the frame cover 400 may be configured to cover the rear side of the first frame 310 as well as the second frame 320. That is, the frame cover 400 may be configured to cover the second opening O2 from the outside.

Since the frame cover 400 according to FIGS. 13 and 14 is the same as the frame cover 400 according to FIGS. 5 and 6, excluding the configuration of covering the rear side of the first frame 310, a redundant description will be omitted.

The frame cover 400 may have not only a first cover hole CH1 formed at a position corresponding to the venting hole VH, but also a second cover hole CH2 formed at a position corresponding to the second opening O2. In addition, the cover member 410 may include a first cover member 411 configured to cover the first cover hole CH1 and a second cover member 412 configured to cover the second cover hole CH2.

According to the above-implemented configuration of the present disclosure, when thermal runaway occurs in the battery module 10, as indicated by the bold arrows in FIG. 14, the first cover member 411 and the second cover member 412 may be opened so that the venting gas or flame generated inside the battery module 10 may be discharged upward and rearward.

In addition, according to the above-implemented configuration of the present disclosure, the venting gas or flame discharged to the outside through the opened second opening O2 may be fundamentally blocked from flowing back into the battery module 10. Therefore, the heat propagation to neighboring battery cells 110 or battery modules 10 may be minimized, thereby effectively preventing or delaying the thermal runaway propagation.

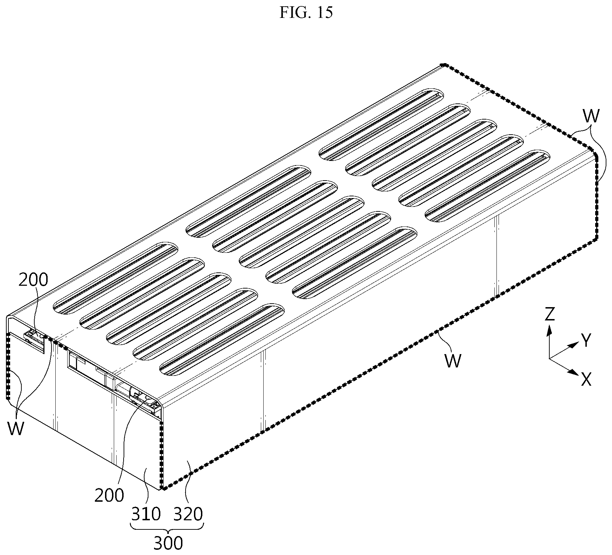

FIG. 15 is a drawing illustrating a weld of a battery module according to an embodiment of the present disclosure.

Referring to FIG. 15, a weld W may be formed at the open-sided ends where the first frame 310 and the second frame 320 are in contact with each other. That is, the first frame 310 and the second frame 320 may be configured such that the open-sided ends come into contact with each other. In addition, the contact portions of the first frame 310 and the second frame 320 may be welded to form a weld W.

The weld W may be formed on at least 6 of the 12 edges of the module frame 300. For example, as disclosed in the embodiment illustrated in FIG. 15, the weld W may be formed at the top, left, and right sides where the inner open-sided ends of the first frame 310 and the second frame 320 come into contact with each other at the front and rear of the battery module 10.

The weld W may be configured in a line shape. For example, the first frame 310 and the second frame 320 may be configured as a line extending along the contact edges therebetween.

According to the above-implemented configuration of the present disclosure, the first frame 310 and the second frame 320 may be more stably coupled. In addition, in this case, the leakage of venting gas or flame between the first frame 310 and the second frame 320 may be more effectively prevented.

According to the above-implemented configuration of the present disclosure, the length of the weld W may be formed long. Therefore, the bonding strength of the weld W may be further improved, so that the bonding strength between the first frame 310 and the second frame 320 may also be increased. In addition, the sealing performance of the weld W may be further improved.

In particular, in the above-implemented configuration, since the weld W is formed long in the horizontal and vertical directions, the tensile stress of the fastening portion between the first frame 310 and the second frame 320 may be improved.

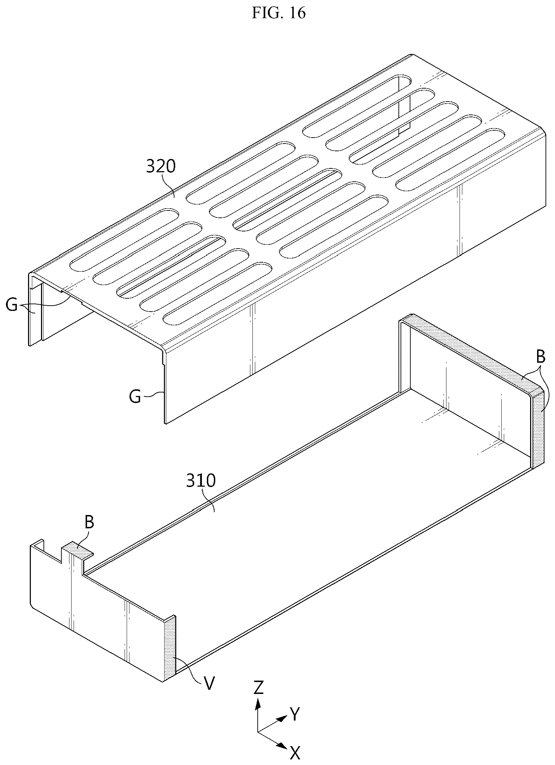

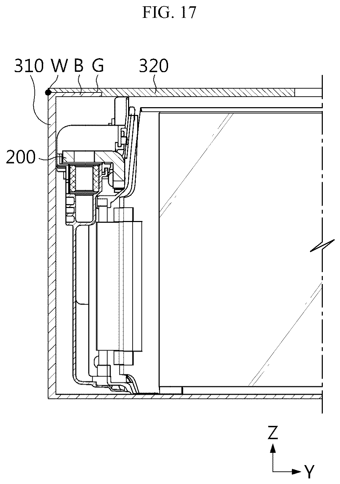

FIG. 16 is a drawing illustrating a separated module frame in a battery module according to another embodiment of the present disclosure, and FIG. 17 is a cross-sectional view illustrating a coupling portion of a module frame to a battery module according to another embodiment of the present disclosure.

The first frame 310 and the second frame 320 may be configured so that one supports the other in an outward direction. For example, one of the first frame 310 and the second frame 320 may be configured to be inserted into or seated on the other.

As a more specific example, referring to FIG. 16 and FIG. 17, a bending portion B may be provided at the open-sided end of the first frame 310. The bending portion B may be configured such that the end of the first frame 310 is bent inward. The bending portion B may be provided on at least a portion of the open-sided edge of the first frame 310. The bending portion B may be configured to extend along the open-sided edge of the first frame 310.

In addition, a concave portion G may be configured to be at least partially recessed inward from the open-sided end of the second frame 320. The concave portion G may be configured such that the bending portion B is inserted thereinto. The concave portion G may be configured to the bending portion B in position, shape, and size. Accordingly, the first frame 310 and the second frame 320 may be configured such that they are inserted and coupled.

According to this configuration of the present disclosure, since one component of the module frame 300 supports the remaining component in an upward direction (outward direction), the contact state between the first frame 310 and the second frame 320 may be stably maintained during the welding process. Therefore, welding performance may be improved.

Furthermore, as disclosed in the embodiment illustrated in FIG. 16, such a support configuration of the first frame 310 and the second frame 320 may be formed on the entire edge of the first frame 310 or the second frame 320, such as the top, lower, left, and right sides. In this case, since the bending portion B is inserted into the interior (concave portion G) of the second frame 320, the insertion fastening between the first frame 310 and the second frame 320 may be implemented entirely on the module frame 300. Accordingly, the mechanical bonding strength and assembly properties between the first frame 310 and the second frame 320 may be further improved.

In this implemented configuration, as disclosed in the embodiment illustrated in FIG. 17, the weld W formed on the top side of the module frame 300 may be formed at the portion where the outermost portion of the concave portion G of the second frame 320 is provided and where the bending portion B of the first frame 310 is bent. Accordingly, the weld W may be provided further inward than the outermost edge of the module frame 300. As a result, the coupling structure of the first frame 310 and the second frame 320 may be maintained more stably.

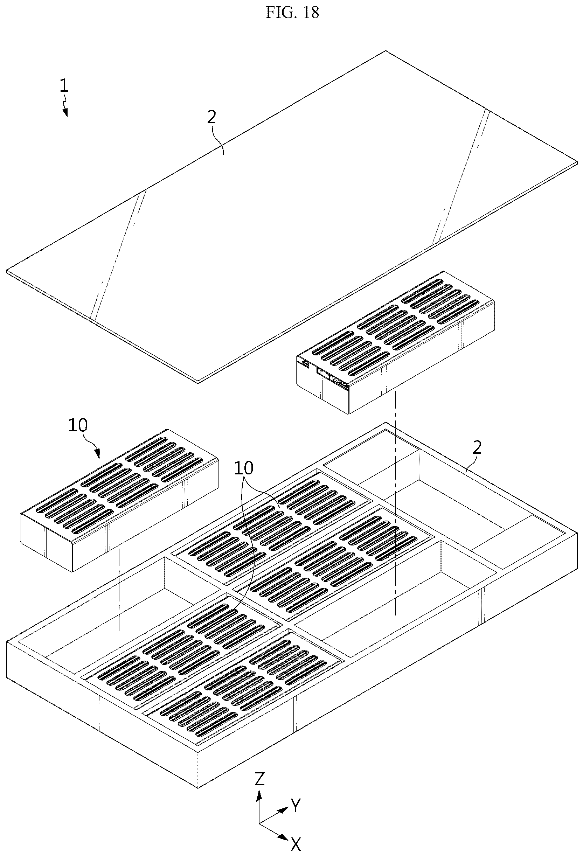

FIG. 18 is a schematically perspective view of a battery pack according to an embodiment of the present disclosure.

Referring to FIG. 18, the battery pack 1 according to an embodiment of the present disclosure may include one or more battery modules 10 according to an embodiment of the present disclosure described above. In addition, the battery pack 1 according to an embodiment of the present disclosure may further include a pack case 2. The pack case 2 may be configured to store a plurality of battery modules 10. The pack case 2 may be formed in a cuboid box shape.

In addition, although not shown in the drawing, the pack case 2 may be configured to store components such as a BMS (Battery Management System), a current sensor, and a fuse for integrated control of charging and discharging of one or more battery cells 110 therein.

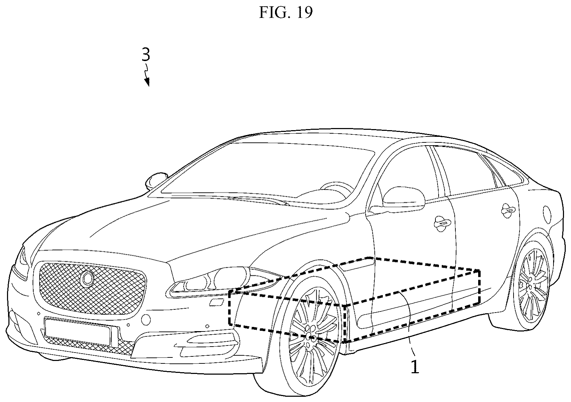

FIG. 19 is a schematically perspective view of a vehicle according to an embodiment of the present disclosure.

Referring to FIG. 19, the vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may be operated by power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a cell assembly comprising a plurality of battery cells;
a module terminal electrically connected to the plurality of battery cells and disposed on at least one of six sides of the cell assembly; and
a module frame configured to receive the cell assembly and comprising a first frame configured to cover some of the sides of the cell assembly, as well as a side of the cell assembly where the module terminal is disposed, and a second frame configured to cover remaining sides of the cell assembly.

2. The battery module according to claim 1,
wherein the first frame is configured to cover front, rear, and bottom sides of the cell assembly, and
wherein the second frame is configured to cover top, left, and right sides of the cell assembly.

3. The battery module according to claim 2,
wherein the first frame is configured in an integrated form to cover the front, rear, and bottom sides of the cell assembly.

4. The battery module according to claim 2,
wherein the second frame is configured in an integrated form to cover the top, left, and right sides of the cell assembly.

5. The battery module according to claim 1,
wherein at least one of the first frame and the second frame is configured to be bent so as to cover different sides of the cell assembly.

6. The battery module according to claim 1,
wherein at least one of the first frame and the second frame is configured in a U-shape with three open sides.

7. The battery module according to claim 1,
wherein the second frame has a venting hole configured to discharge venting gas generated in the battery cell to an outside.

8. The battery module according to claim 7,
wherein the venting hole is provided on the upper portion of the cell assembly.

9. The battery module according to claim 7,
further comprising a frame cover configured to at least partially cover the module frame.

10. The battery module according to claim 9,
wherein a cover hole is formed in the frame cover at a position corresponding to the venting hole.

11. The battery module according to claim 10,
wherein the frame cover
comprises a cover member configured to cover the cover hole and to open and close the cover hole by venting gas.

12. The battery module according to claim 1,
wherein at least a portion of the first frame is configured to be open on a side where the module terminal is located.

13. The battery module according to claim 12,
wherein the first frame comprises a protrusion configured such that at least a portion protrudes upward from the side where the module terminal is located so as to come into contact with the second frame.

14. The battery module according to claim 1,
wherein the first frame is configured in a form in which a front side and a rear side are rotationally symmetrical.

15. The battery module according to claim 1,
wherein the first frame is configured in a form in which at least a portion is open on a side opposite a side where the module terminal is located.

16. The battery module according to claim 1,
wherein a weld is formed at an open-sided end where the first frame and the second frame are in contact with each other.

17. A battery pack comprising a battery module according to any one of claims 1 to 16.

18. A vehicle comprising a battery module according to any one of claims 1 to 16.
